# EUROPÄISCHE PATENTSCHRIFT

(11) **EP 1 058 008 B1**
(45) Veröffentlichungstag und Bekanntmachung des Hinweises auf die Patenterteilung: **03.03.2004**
(21) Anmeldenummer: 00110382.9
(22) Anmeldetag: 15.05.2000
(51) Int. Cl.: F04C 13/00, A22C 11/00

(54) **Verfahren und Vakuumfüller zum Abfüllen einer pastösen Masse**
Method and apparatus for processing pasty material in vacuum
Procédé et appareil pour le traitement de produits pâteux sous vide

(30) Priorität: 02.06.1999 DE 19925417
(43) Veröffentlichungstag der Anmeldung: 06.12.2000
(73) Patentinhaber: Albert Handtmann Maschinenfabrik GmbH & Co. KG, 88400 Biberach (DE)
(72) Erfinder: Zinser, Georg, 88456 Winterstettenstadt (DE)
(74) Vertreter: Grünecker, Kinkeldey, Stockmair & Schwanhäusser Anwaltssozietät

(56) Entgegenhaltungen:
- GB-A- 2 160 182
- US-A- 3 742 556
- US-A- 4 080 104

## Beschreibung

Die Erfindung betrifft ein Verfahren gemäß dem Oberbegriff des Anspruchs 1 und einen Vakuumfüller gemäß dem Oberbegriff des Anspruchs 6.

Es sind Vakuumfüller zum Fördern von Wurstbrät bekannt, die als Dosieraggregat ein Flügelzellenförderwerk verwenden. Ein solcher Vakuumfüller wird beispielsweise in der europäischen Patentschrift EP 0432 388 B2 beschrieben. Bei diesen Vakuumfüllem wird über einen Verbindungskanal eine Vakuumpumpe an das Förderwerk angeschlossen, um einen Unterdruck in dem Förderwerk zu erzeugen, der ein vakuumunterstütztes Einziehen des Bräts in die Flügelzellen ermöglicht und gleichzeitig auch dem Füllgut Luft entzieht.

In den Verbindungskanal ist dabei im Allgemeinem ein Wasserabscheider eingebaut, der Wasser oder andere dünnflüssige Massen auffängt, die bei der Unterdruckerzeugung aus dem Förderwerk herausgesaugt werden. In der Praxis geschieht dies insbesondere bei nicht sachgemäßer Bedienung der Maschine, wenn das Bedienpersonal z.B. zur Reinigung des Förderwerks dieses mit Wasser durchspült und dabei vergißt, die Vakuumpumpe auszuschalten.

Um zu verhindern, dass das in dem Wasserabscheider aufgefangene Wasser weiter in die Vakuumpumpe gesaugt wird, sind folgende zwei Lösungen bekannt.

Zum einen kann im Inneren des Wasserabscheiders in der Nähe der Öffnung, an der das vom Wasserabscheider zur Vakuumpumpe führende Verbindungsrohr angeschlossen ist, in einem Drahtgehäuse ein kugelförmiger Schwimmkörper angebracht werden, der auf dem Wasser schwimmt und die Öffnung zur Vakuumpumpe hin verschließt, sobald der Wasserstand im Wasserabscheider zu hoch ansteigt.

Als Alternative hierzu kann im Wasserabscheider ein Sensor angebracht werden, der erfasst, wenn der Wasserstand zu hoch ansteigt, und der ein im Inneren des vom Wasserabscheider zur Vakuumpumpe führenden Verbindungsrohres angebrachtes Magnetventil schaltet, dass die Querschnittsfläche des Rohres vollständig verschließt.

Mit beiden Vorgehensweisen wird somit ermöglicht, die Unterdruckerzeugung in dem Verbindungskanal und damit im Wasserabscheider zu beenden, um somit eine Absaugung von Flüssigkeit aus dem Wasserabscheider in die Vakuumpumpe zu verhindern.

Allerdings haben diese beiden bekannten Vorgehensweisen den Nachteil, dass das Zuleitungsrohr zur Vakuumpumpe verschlossen werden muss, was wegen des Vorhandenseins des Schwimmers bzw. des Verschlußventils in der Leitung leicht zu Verschmutzungen oder zu anderen als Störgrößen wirkenden Faktoren, wie Querschnittsverengungen oder Feuchtigkeitsentstehung führen kann, die die Betriebsfähigkeit und die Langzeitstabilität des Vakuumfüllers vermindern können. Zudem werden für leistungsfähigere Vakuumpumpsysteme im allgemeinen auch Zuleitungsrohre mit größerem Querschnitt erforderlich, wodurch bei dem bekannten System auch größere Verschlußventile verwendet werden müssen, die erhöhte Kosten verursachen.

Die Aufgabe der vorliegenden Erfindung besteht deshalb darin, ein Verfahren und einen Vakuumfüller zum Abfüllen einer pastösen Masse zur Verfügung zu stellen, mit denen, auch bei größer dimensionierten Vakuumpumpen effektiv und dauerhaft verhindert werden kann, dass Flüssigkeit in die Vakuumpumpe des Vakuumfüllers gelangt.

Diese Aufgabe wird gelöst durch ein Verfahren mit den Merkmalen des Anspruchs 1 und einen Vakuumfüller mit den Merkmalen des Anspruchs 6. Vorteilhafte Ausführungsformen sind Gegenstand von Unteransprüchen.

Dadurch, dass eine den Flüssigkeitsauffangbehälter und die Vakuumpumpe verbindende Verbindungsleitung belüftet wird, wenn der Flüssigkeitspegelstand in dem Flüssigkeitsauffangbehälter einen gewissen Pegelstandswert erreicht, kann besonders effektiv verhindert werden, dass in dem Flüssigkeitsauffangbehälter befindliche Flüssigkeit durch den Unterdruck in die Vakuumpumpe gesaugt wird.

Da somit, im Gegensatz zum Stand der Technik, die Verbindungsleitung zur Vakuumpumpe nicht mehr durch einen Schwimmer oder ein Verschlussventil im Inneren der Zuleitung verschlossen werden muß, um die Unterdruckerzeugung zu unterbrechen, ist die Störanfälligkeit und die Gefahr einer Verschmutzung des Vakuumsystems wesentlich vermindert.

Bevorzugt erfolgt die Belüftung der Verbindungsleitung durch Regelung eines Proportionalventils und eines logischen Ventils, die parallel zueinander geschaltet werden.

Unter einem Proportionalventil wird hierbei insbesondere ein Ventil verstanden, das über einen gewissen (Unter-) Druckbereich kontinuierlich geregelt werden kann. Das Proportionalventil läßt dabei so viel Luft in die durch die angeschlossene Vakuumpumpe evakuierte, unter einem Unterdruck stehende Verbindungsleitung fliessen, dass ein innerhalb des Druckbereichs liegender Wert des Luftdruckes eingeregelt werden kann.

Unter einem logischen Ventil wird im Wesentlichen ein Ventil verstanden, das zwischen zwei einzelnen Zuständen schaltbar ist. Dies könnte z.B. ein Ventil sein, das entweder ganz geöffnet oder ganz geschlossen werden kann.

Durch das Parallelschalten dieser beiden Ventile ist es möglich, beim Betrieb des Förderwerks den Druckpegel im Förderwerk über einen großen Bereich etwa kontinuierlich einstellen zu können.

Der maximale Druck in der Verbindungsleitung bzw. im Förderwerk kann dabei erreicht werden, wenn die Vakuumpumpe eingeschaltet und die Belüftungsventile geschlossen sind. Durch Regelung des Proportionalventils allein kann ein Druck im Bereich direkt oberhalb dieses maximalen Unterdrucks eingestellt werden.

Wenn das logische Ventil einen niedrigere maximale Belüftungsstärke als das Proportionalventil hat, kann weiterhin durch Zuschalten, d.h. Öffnen des logischen Ventils der Luftdruck in einem Bereich geregelt werden, der oberhalb des Drucks liegt, der sich ergibt, wenn das Proportionalventil allein maximal aufgedreht würde.

Die Reglung mit Hilfe der beiden parallelgeschalteten Ventile kann deshalb in kontinuierlicher Weise bis zu einer maximalen Belüftungsstärke durchgeführt werden, die der Summe der maximalen Belüftungsleistungen des Proportionalventils und des logischen Ventils entspricht.

Somit kann selbst bei höher dimensionierten Vakuumpumpen, die größere Zulaufleitungen erfordern, durch das Parallelschalten eines Proportionalventils und eines billigeren logischen Ventils auf einfache und kostengünstige Weisung die Regelung des Vakuums in dem Flügelzellenförderwerk ermöglicht werden. Die anfallenden Kosten sind dabei geringer als die Kosten, die bei dem bekannten Verfahren für ein entsprechend größer zu dimensionierendes Verschlussventil oder für ein einzelnes Proportionalventil mit entsprechend größerem Regelbereich notwendig wären.

In einer vorteilhaften Ausführungsform wird die Vakuumquelle abgeschaltet, wenn der Flüssigkeitspegelstand in dem Flüssigkeitsauffangbehälter den gewissen Pegelstandswert erreicht. Durch ein etwa gleichzeitiges Abschalten der Vakuumpumpe und Belüften der Verbindungsleitung, wenn die Flüssigkeit in die Verbindungsleitung überzuschwappen droht, wird besonders effektiv und sicher verhindert, dass Flüssigkeit in die Pumpe gelangen kann.

Wenn der Flüssigkeitspegelstand in dem Flüssigkeitsauffangbehälter den gewissen Pegelstandswert erreicht hat, wird die Verbindungsleitung bevorzugt automatisch belüftet und die Vakuumquelle automatisch abgeschaltet. Weil diese Vorgänge automatisiert werden, kann der Schutz der Vakuumpumpe vor Überflutung mit Flüssigkeiten besonders gesichert werden, da ein fehlerhaftes Verhalten des Bedienpersonals im Wesentlichen ausgeschlossen wird.

Vorteilhafterweise klappt ein Klappdeckel des Flüssigkeitsauffangbehälters selbsttätig auf, wenn die Verbindungsleitungs belüftet wird. Dies ermöglicht, dass die in dem Auffangbehälter gesammelte Flüssigkeit sofort abgeleitet werden kann, wenn der Auffangbehälter bis oben gefüllt ist, um dadurch das Arbeiten und betreiben des Flügelzellenförderwerks nicht unnötig lange unterbrechen zu müssen, wenn der Flüssigkeitsauffangbehälter ausgetauscht oder entleert werden muss.

Bei einem erfindungsgemäßen Vakuumfüller ist eine mit dem Sensorelement des Flüssigkeitsauffangbehälters gekoppelte Belüftungsventilanordnung zur Belüftung der von dem Flüssigkeitsauffangbehälter zu der Vakuumpumpe führenden zweiten Verbindungsleitung vorgesehen.

Durch diese Anordnung können die vorhergehend beschriebenen Vorteile des erfindungsgemäßen Verfahrens besonders einfach verwirklicht werden. Insbesondere ist auch ein automatisches Betreiben des Vakuumfüllers durch die z.B. elektrische Ankopplung der Sensorelemente mit der Belüftungsventilanordnung möglich, wenn das Sensorelement detektiert, dass der Flüssigkeitspegel im Flüssigkeitsauffangbehälter einen maximal zulässigen Wert erreicht hat.

Vorteilhafterweise umfasst die Belüftungsventilanordnung dabei ein Proportionalventil und ein logisches Ventil, die zueinander parallel geschaltet sind. Durch diese Anordnung lässt sich somit ein kostengünstiges und sicheres Vakuumfüllergerät bereitstellen, das in der vorhergehend beschriebenen Art und Weise effizient eingesetzt werden kann.

In einer vorteilhaften Ausführungsform ist die Belüftungsventilanordnung zwischen Flüssigkeitsauffangbehälter und Vakuumquelle an der zweiten Verbindungsleitung angeordnet. Weil die Ventilanordnung hierbei nicht unmittelbar mit der Vakuumpumpe selbst, sondern beabstandet davon in einem Zwischenbereich zwischen Flüssigkeitsauffangbehälter und Vakuumpumpe angeordnet ist, kann zudem effektiv ein vollständiges Belüften des Auffangbehälters über die zweite Verbindungsleitung und damit eine Aufhebung des Unterdrucks erfolgen, selbst wenn die Vakuumpumpe bei vollem Auffangbehälter noch angeschaltet sein sollte.

Bevorzugt umfasst der Flüssigkeitsauffangbehälter einen im Wesentlichen seitlich angeordneten, durch Unterdruck verschließbaren Klappdeckel. Somit kann ein Klappdeckel angebracht werden, der durch den beim Betrieb des Vakuumfüllers in der Regel wirkenden Unterdruck so an die Wandung des Behälters gesaugt wird, dass er den Flüssigkeitsauffangbehälter dicht verschließt, ohne dass eine weitere Verriegelung durch sonstige Verschlussvorrichtungen notwendig ist.

In diesem Fall kann die Dichtheit des Auffangbehälters gewährleistet und weiterhin ein automatisches und nahezu sofortiges Entleeren des bis zu dem gewissen Pegelstand gefüllten Flüssigkeitsauffangbehälters ermöglicht werden, weil das in dem Auffangbehälter gesammelte Wasser dann aufgrund der unterbrochenen Unterdruckerzeugung den Klappdeckel zur Seite wegdrücken und aus dem Auffangbehälters z.B. in eine darunter angeordnete Ableitungseinrichtung fließen kann.

Im Folgenden wird die Erfindung anhand des in den Zeichnungen dargestellten Ausführungsbeispiels näher erläutert.

Dabei zeigt
- Figur 1: einen schematischen Querschnitt durch einen erfindungsgemäßen Vakuumfüller und
- Figur 2: einen schematischen Querschnitt durch einen Teil des in Figur 1 dargestellten Vakuumfüllers, wobei die Schnittebene in Figur 2 etwa senkrecht zu der in Figur 1 ist.

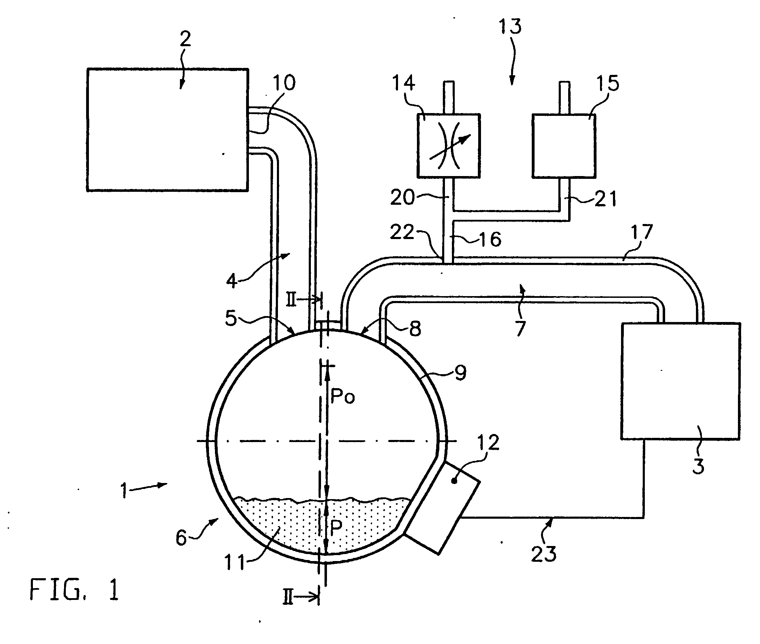

Ein erfindungsgemäßer Vakuumfüller ist in Figur 1 insgesamt mit 1 bezeichnet. Der Vakuumfüller 1 umfasst dabei ein Flügelzellenförderwerk 2 mit einer daran angeschlossenen Vakuumpumpe 3. Das Flügelzellenförderwerk 2 ist in diesem Fall ein an sich bekanntes Förderwerk zum Abfüllen und Portionieren von Wurstbrät.

Der Vakuumkanal, der von der Pumpquelle 3 zu einer Ansatzöffnung 10 in dem Flügelzellenförderwerk 2 führt, umfasst hierbei ein erstes Verbindungsleitungsrohr 4, welches von der Vakuumöffnung 10 im Flügelzellenförderwerk 2 zu einer ersten Öffnung 5 in der Wandung 9 eines Flüssigkeitsauffangbehälters 6 führt, und ein zweites Verbindungsleitungsrohr 7, welches von einer zweiten Öffnung 8 in der Wandung 9 des Auffangbehälters 6 zu einem nicht dargestellten Ansatzstutzen der Vakuumpumpe 3 führt.

Der zwischen Flügelzellenförderwerk 2 und Vakuumpumpe 3 in der Vakuumleitung 4,7 angeordnete Auffangbehälter 6 hat dabei, ohne auf diese Form beschränkt zu sein, eine im Wesentlichen zylinderförmige Wandung 9, wobei in Figur 1 schematisch ein Schnitt durch eine Ebene senkrecht zur Längsachse des Auffangbehälters 6 dargestellt ist.

Die Ansatzöffnungen 5 und 8 des ersten bzw. zweiten Verbindungsleitungsrohres 4, 7 befinden sich in einem oberen Bereich des Auffangbehälters 6, so dass aus dem Förderwerk 2 herausgesaugte Flüssigkeit 11, insbesondere Wasser, durch die erste Verbindungsleitung 4 von oben her in den Auffangbehälter 6 einlaufen und sich an dessen Boden ansammeln kann.

In der Wandung 9 ist ein Sensorelement 12 installiert, das z.B. auf optischem, elektrischem oder elektrochemischem Wege den Pegelstand P der Flüssigkeit 11 im Inneren des Auffangbehälters 6 mißt. Der Sensor 12 muss zumindest so dimensioniert und angebracht sein, dass er eine gewisse vorbestimmbare Pegelhöhe P₀ bestimmen kann. Es ist nicht unbedingt erforderlich, dass der Sensor 12 auch über einen größeren (kontinuierlichen) Bereich die Höhe des Wasserstands im Auffangbehälterinneren messen kann, solange nur erkannt werden kann, ob der Wasserpegel bis zur gewissen Pegelhöhe P₀ angestiegen ist.

Die Höhe des gewissen Pegelstandes P₀ wird dabei so gewählt, dass bei im Auffangbehälter 6 wirkendem, von der Vakuumpumpe 3 erzeugtem Unterdruck keine Flüssigkeit 11 aus dem Auffangbehälter 6 heraus in die'zweite Verbindungsleitung 7 und damit in die Vakuumpumpe 3 gelangen kann.

Weiterhin ist an der zweiten Verbindungsleitung 7 etwa in einem mittleren Bereich zwischen Auffangbehälter 6 und Vakuumpumpe 3 eine Belüftungsventilanordnung 13 zur Belüftung der zweiten Verbindungsleitung 7 angebracht. Die Belüftungsventilanordnung 13 umfasst dabei eine erste Belüftungsleitung 20 mit einem an sich bekannten Proportionalventil 14 und, parallel dazu geschaltet, eine zweite Belüftungsleitung 21 mit einem an sich bekannten logischen Ventil 15, wobei die beiden Ventile 14, 15 den Luftdurchfluss in den beiden Leitungen 20,21 regeln. Die beiden Leitungen 20,21 führen in eine gemeinsame Zulaufleitung 16, die in einer Öffnung 22 der Wandung 17 der zweiten Verbindungsleitung 7 mündet.

Die dem zweiten Verbindungsleitungsrohr 7 zuzuführende Luftmenge kann dabei über das Proportionalventil 14 in einem vorgegebenen Bereich im Wesentlichen kontinuierlich geregelt werden, wohingegen das logische Ventil 15 nur entweder vollständig geöffnet oder geschlossen werden kann, so dass es nur zwischen zwei diskreten Zuständen schaltbar ist.

Das Proportionalventil 14 ist dabei so dimensioniert, dass es einen größeren Regelbereich als das logische Ventil 15 alleine genommen hat.

Weiterhin ist das Sensorelement 12 über ein elektrisches Kabel 23 mit der Vakuumpumpe 3 und über eine nicht dargestellte weitere Kabelverbindung mit dem Proportionalventil 14 und dem logischen Ventil 15 verbunden, um diese Elemente 3,14,15 automatisch aufgrund eines Signals des Sensorelements 12 zu steuern.

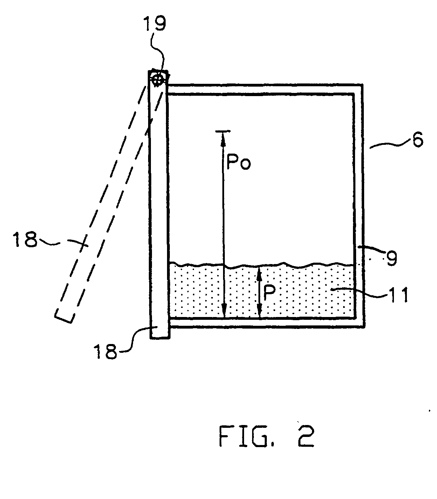

Wie in der in Figur 2 dargestellten schematischen Schnittzeichnung des Auffangbehälters 6 von Figur 1, wobei die Schnittebene etwa senkrecht zu der in Figur 1 liegt, zu erkennen ist, kann der im Wesentlichen zylinderförmige Auffangbehälter 6 an einer Seite durch eine Deckelplatte 18 verschlossen werden, die um eine an einem Ende der Deckelplatte 18 angebrachte Drehachse 19 drehbar ist, welche über eine nicht dargestellte Befestigungseinrichtung an der Wandung 9 des Auffangbehälters 6 befestigt ist.

Die Deckelplatte 18 ist an ihrem der Drehachse 19 gegenüberliegenden Ende nicht durch ein weiteres Rast- oder sonstiges Befestigungselement mit der Wandung 9 des Auffangbehälters 6 gekoppelt, obwohl auch eine solche weitere Befestigungseinrichtung alternativ möglich wäre.

In der durch den durchgehend gezeichneten Umriss gekennzeichneten Position des Dekkels 18 befindet sich dieser in einer den Auffangbehälter 6 dicht verschließenden Lage, in der der Deckel 18 durch Unterdruck an die Wand 9 des Auffangbehälters 6 gesaugt wird. In der durch den gestrichelten Umriss gekennzeichneten Position wiederum ist der Deckel 18 seitlich abgeklappt, so dass das im Behälter 6 gesammelte Wasser 11 auslaufen kann.

Unter Durchführung des erfindungsgemäßen Verfahrens kann mit dem erfindungsgemäßen Vakuumfüller nun wie folgt gearbeitet werden.

Vor Beginn der Unterdruckerzeugung, also insbesondere auch wenn der Vakuumfüller noch ausgeschaltet ist, ist der Auffangbehälter 6 ausgeleert und die Deckelplatte 18 liegt aufgrund der gravitativen Einziehung an der Gehäusewand 9 an, so dass das Innere des Auffangbehälters 6 bis auf die beiden Zuleitungsöffnungen 5 und 8 zu dem ersten bzw. zweiten Verbindungsleitungsrohr 4, 7 in etwa abgedichtet ist.

Wenn nun das Flügelzellenförderwerk 2 in Gang gesetzt wird, um eine eingefüllte Menge an Wurstbrät zu portionieren, so wird gleichzeitig die Vakuumpumpe 3 angeschaltet. Die Vakuumpumpe 3 erzeugt in diesem Betriebszustand einen Unterdruck in dem Förderwerk 2, der zur Unterstützung der Einziehung des Bräts in die Flügelzellen des Förderwerks 2 und zur Absaugung von Luftanteilen aus der pastösen Wurstbrätmasse dient.

Die beginnende Unterdruckerzeugung durch Einschalten der Vakuumpumpe 3, die auch in dem zwischengeschalteten Auffangbehälter 6 wirkt, führt dazu, dass der Klappdeckel 18 an die Gehäusewand 9 gesaugt wird und diese dichtend anliegt

Der Unterdruck beim Betrieb des Vakuumfüllers wird hierbei wie folgt geregelt Die Vakuumpumpe 3 kann immer nur eine unveränderbare maximale Saugleistung und damit einen vorgegebenen maximal Unterdruck in dem Vakuumfüller 1 erzeugen. Durch Steuern der in der zweiten Verbindungsleitung 7 angeordneten Belüftungsventilanordnung 13 ist es allerdings möglich, auch in kontinuierlicher Weise einen niedrigeren als den durch die Vakuumpumpe 3 gegebenen maximalen Unterdruck in der Verbindungsleitung 7 und damit über dem Auffangbehälter 6 und die erste Verbindungsleitung 4 auch im Flügelzellenförderwerk 2 zu erzeugen.

Der Druck in der Vakuumleitung 4, 7 kann dabei von dem maximalen Wert, der durch die Vakuumpumpe 3 gegeben ist, bis zu einem darüberliegenden Wert, der durch das Proportionalventil gegeben ist, durch Regelung der zugeführten Luftmenge allein durch das Proportionalventil 14 kontinuierlich eingestellt werden, während der darüberliegende Druckbereich dadurch erfasst werden kann, dass das logische Ventil 15 geöffnet und zusätzlich der Öffnungsgrad des Proportionalventils 14 geregelt wird.

Somit können durch Regelung der beiden Belüftungsventile 14 und 15 der Betrag des Unterdrucks in dem Flügelzellenförderwerk 2 im Wesentlichen kontinuierlich eingestellt werden.

Beim Betrieb des Flügelzellenförderwerks 2, insbesondere aber bei nicht sachgemäßer Bedienung der Maschine, z.B. wenn das Bedienpersonal zwischen verschiedenen zu portionierenden Chargen das Flügelzellenförderwerk 2 mit Wasser durchspült, ohne die Vakuumpumpe 3 abzuschalten, kann Wasser 11 oder andere dünnflüssige Massen aus dem Inneren des Förderwerks 2 durch die erste Verbindungsleitung 4 in das Innere des Auffangbehälters 6 gesaugt werden.

Dort sammelt sich die aus dem Flügelzellenförderwerk 2 gelangte Flüssigkeit 11 am Boden an. Aufgrund der Unterdruckerzeugung bleibt der Klappdeckel 18 weiterhin verschlossen, so dass der Auffangbehälter 6 im Wesentlichen abgedichtet bleibt.

Somit kann es während des Betriebes des Förderwerks passieren, dass der Pegelstand P des in dem Auffangbehälter 6 aufgefangenen Wassers 11 allmählich ansteigt. Erreicht das Wasser 11 im Inneren des Auffangbehälters 6 allerdings die vorgegebene Höhe P₀, die durch das Sensorelement 12 erfasst und erkannt wird, so schaltet das Sensorelement 12 bzw. eine nicht dargestellte dazwischen geschaltete automatische z.B. EDV-gestützte Steuerungseinheit über das Verbindungskabel 20 die Vakuumpumpe 3 ab und öffnet gleichzeitig das Proportionalventil 14 und das logische Ventil 15 vollständig.

Da in diesem Fall die Unterdruckerzeugung im Vakuumfüller 1 aufhört, wird der Klappdekkel 18 nicht mehr an die Wandung 9 des Auffangbehälters 6 angesaugt und der auf den Klappdeckel 18 durch die bereits bis zum Wasserpegel P₀ eingefüllte Wassermenge 11 wirkende Druck klappt diesen zur Seite in die in Figur 2 gestrichelt gezeichnete Lage, so dass die Flüssigkeit 11 abfließen kann bevor sie in die Vakuumpumpe 3 gelangt.

Das Beenden der Unterdruckerzeugung und damit das Belüften der Maschine erfolgt nicht nur, wenn der Wasserstand im Auffangbehälter zu hoch ansteigt, sondern erfolgt auch dann, wenn die Maschine, z.B. auch zu Reinigungszwecken abgeschaltet wird.

In einer alternativen Ausführungsform, in der das logische Ventil 15 nicht zur Regelung der Vakuumhöhe im Förderwerk 2 während des Betriebs benötigt wird, weil diese Regelung allein durch das Proportionalventil vorgenommen werden kann, kann das logische Ventil 15 auch so ausgelegt sein, dass es nur zur Belüftung des Verbindungsleitungsrohres 7 dient, wenn das Wasser 11 im Auffangbehälter 6 die gewisse Pegelhöhe P₀ erreicht.

In diesem Fall wird dann zur vollständigen Durchlüftung der Leitung 7 nur das logische Ventil 15 geöffnet, während das Proportionalventil 14 hierzu nicht benötigt wird und somit evtl. geschlossen werden kann.

Durch den erfindungsgemäßen Vakuumfüller und das erfindungsgemäße Verfahren ist es somit möglich, auf einfache und bedienerfreundliche Weise die Vakuumpumpe vor Überflutung mit Flüssigkeiten zu schützen, ohne dass irgendwelche mechanischen Vorrichtungen, wie Schwimmerventile oder Verschlussventile im Inneren der Vakuumleitung benötigt werden.

## Patentansprüche

1. Verfahren zum Abfüllen einer pastösen Masse, insbesondere von Wurstbrät, mit einem Vakuumfüller (1), wobei in einem Flügelzellenförderwerk (2) durch eine Vakuumpumpe (3) ein Unterdruck erzeugt und durch den Unterdruck aus dem Flügelzellenförderwerk (2) herausgeleitete Flüssigkeit (11) in einem Flüssigkeitsauffangbehälter (6) aufgefangen wird,
**dadurch gekennzeichnet, dass**
eine den Flüssigkeitsauffangbehälter (6) und die Vakuumpumpe (3) verbindende Verbindungsleitung (7) belüftet wird, wenn der Flüssigkeitspegelstand (P) in dem Flüssigkeitsauffangbehälter (6) einen gewissen Pegelstandswert (P₀) erreicht.

2. Verfahren nach Anspruch 1,
**dadurch gekennzeichnet, dass**
die Belüftung der Verbindungsleitung (7) durch Reglung eines Proportionalventils (14) und eines logischen Ventils (15) erfolgt, die parallel zueinander geschaltet werden.

3. Verfahren nach Anspruch 1 oder 2,
**dadurch gekennzeichnet, dass**
die Vakuumpumpe (3) abgeschaltet wird, wenn der Flüssigkeitspegelstand (P) in dem Flüssigkeitsauffangbehälter (6) den gewissen Pegelstandswert (P₀) erreicht.

4. Verfahren nach mindestens einem der vorherigen Ansprüche,
**dadurch gekennzeichnet, dass**
die Verbindungsleitung (7) automatisch belüftet und/oder die Vakuumpumpe (3) automatisch abgeschaltet wird, wenn der Flüssigkeitspegelstand (P) in dem Flüssigkeitsauffangbehälter (6) den gewissen Pegelstandswert (P₀) erreicht.

5. Verfahren nach mindestens einem der vorherigen Ansprüche,
**dadurch gekennzeichnet, dass**
ein Klappdeckel (18) des Flüssigkeitsauffangbehälters (6) aufklappt, wenn die Verbindungsleitung (7) belüftet wird.

6. Vakuumfüller (1) mit einem Flügelzellenförderwerk (2) zum Abfüllen einer pastösen Masse, insbesondere von Wurstbrät, mit einer Vakuumpumpe (3) zur Erzeugung eines Unterdrucks in dem Flügelzellenförderwerk (2), mit einem Flüssigkeitsauffangbehälter (6) zum Auffangen von durch die Vakuumpumpe (3) aus dem Flügelzellenförderwerk (2) herausgeleiteter Flüssigkeit (11) und mit einem Sensorelement (12) zur Erfassung eines gewissen Flüssigkeitspegelstandes (P₀) in dem Flüssigkeitsauffangbehälter (6), wobei zur Erzeugung des Unterdrucks in dem Flügelzellenförderwerk (2) eine erste Verbindungsleitung (4) von dem Flügelzellenförderwerk (2) zu dem Flüssigkeitsauffangbehälter (6) und eine zweite Verbindungsleitung (7) von dem Flüssigkeitsauffangbehälter (6) zu der Vakuumpumpe (3) führt,
**gekennzeichnet durch**
eine mit dem Sensorelement (12) gekoppelte Belüftungsventilanordnung (13) zur Belüftung der zweiten Verbindungsleitung (7).

7. Vorrichtung nach Anspruch 6,
**dadurch gekennzeichnet, dass**
die Belüftungsventilanordnung (13) ein Proportionalventil (14) und ein logisches Ventil (15) umfasst, die parallel zueinander geschaltet sind.

8. Vorrichtung nach Anspruch 6 oder 7,
**dadurch gekennzeichnet, dass**
die Belüftungsventilanordnung (13) zwischen Flüssigkeitsauffangbehälter (6) und Vakuumpumpe (3) an der zweiten Verbindungsleitung (7) angeordnet ist.

9. Vorrichtung nach einem der Ansprüche 6 bis 8,
**dadurch gekennzeichnet, dass**
der Flüssigkeitsauffangbehälter (6) einen zumindest teilweise seitlich angeordneten, durch Unterdruck verschliessbaren Klappdeckel (18) umfasst.

## Claims

1. Method of packaging a pasty mass, in particular sausage meat, using a vacuum filler (1), in which negative pressure is generated in a vane-type feeding mechanism (2) by a vacuum pump (3) and liquid (11) extracted from the vane-type feeding mechanism (2) by the negative pressure is collected in a liquid receiver (6), **characterised in that** a connecting pipe (7) connecting the liquid receiver (6) and the vacuum pump (3) is vented when the liquid level (P) in the liquid receiver (6) reaches a specific value (P₀).

2. Method according to claim 1, **characterised in that** the connecting pipe (7) is vented by controlling a proportional valve (14) and a logic valve (15) connected in parallel.

3. Method according to claim 1 or claim 2, **characterised in that** the vacuum pump (3) is switched off when the liquid level (P) in the liquid receiver (6) reaches the specific value (P₀).

4. Method according to at least one of the preceding claims, **characterised in that** the connecting pipe (7) is vented automatically and/or the vacuum pump (3) is switched off automatically when the liquid level (P) in the liquid receiver (6) reaches the specific value (P₀).

5. Method according to at least one of the preceding claims, **characterised in that** a hinged lid (18) of the liquid receiver (6) opens when the connecting pipe (7) is vented.

6. Vacuum filler (1) with a vane-type feeding mechanism (2) for packaging a pasty mass, in particular sausage meat, comprising a vacuum pump (3) for generating negative pressure in the vane-type feeding mechanism (2), a liquid receiver (6) for collecting liquid (11) extracted from the vane-type feeding mechanism (2) by the vacuum pump (3) and a sensor element (12) for detecting a specific liquid level (P₀) in the liquid receiver (6), a first connecting pipe (4) leading from the vane-type feeding mechanism (2) to the liquid receiver (6) and a second connecting pipe (7) leading from the liquid receiver (6) to the vacuum pump (3) in order to generate the negative pressure in the vane-type feeding mechanism (2), **characterised by** a venting valve arrangement (13) for venting the second connecting pipe (7) coupled with the sensor element (12).

7. Device according to claim 6, **characterised in that** the venting valve arrangement (13) includes a proportional valve (14) and a logic valve (15) connected in parallel.

8. Device according to claim 6 or claim 7, **characterised in that** the venting valve arrangement (13) is arranged on the second connecting pipe (7) between the liquid receiver (6) and the vacuum pump (3).

9. Device according to one of claims 6 to 8, **characterised in that** the liquid receiver (6) includes an at least partially laterally arranged hinged lid (18) which can be closed by negative pressure.

## Revendications

1. Procédé pour le conditionnement d'une masse pâteuse, en particulier de chair à saucisse, en utilisant un dispositif de remplissage sous vide (1), dans lequel une dépression est créée dans un transporteur à palettes (2) via une pompe à vide (3) et du liquide (11) entraîné hors du transporteur à palettes (2) par la dépression est collecté dans un conteneur (6) de collecte de liquide,
**caractérisé en ce que**
une conduite de liaison (7) reliant le conteneur (6) de collecte de liquide et la pompe à vide (3) est mise à l'air lorsque le niveau de liquide (P) dans le conteneur (6) de collecte de liquide atteint une certaine valeur de niveau (P₀).

2. Procédé selon la revendication 1,
**caractérisé en ce que**
la mise à l'air de la conduite de liaison (7) s'opère par régulation d'une vanne proportionnelle (14) et d'une vanne tout ou rien (15) qui sont montées parallèlement l'une à l'autre.

3. Procédé selon la revendication 1 ou 2,
**caractérisé en ce que**
la pompe à vide (3) est coupée lorsque le niveau de liquide (P) dans le conteneur (6) de collecte de liquide atteint la certaine valeur de niveau (P₀).

4. Procédé selon l'une des revendications précédentes,
**caractérisé en ce que**
la conduite de liaison (7) est automatiquement mise à l'air et/ou la pompe à vide (3) automatiquement coupée lorsque le niveau de liquide (P) dans le conteneur (6) de collecte de liquide atteint la certaine valeur de niveau (P₀).

5. Procédé selon l'une des revendications précédentes,
**caractérisé en ce que**
un couvercle rabattable (18) du conteneur (6) de collecte de liquide s'ouvre lorsque la conduite de liaison (7) est mise à l'air.

6. Dispositif de remplissage sous vide (1) comportant un transporteur à palettes (2) pour conditionner une masse pâteuse, en particulier de la chair à saucisse, une pompe à vide (3) pour créer une dépression dans le transporteur à palettes (2), un conteneur (6) de collecte de liquide pour collecter du liquide (11) entraîné via la pompe à vide hors du transporteur à palettes (2) et comportant un élément capteur (12) pour détecter un certain niveau de liquide (P₀) dans le conteneur (6) de collecte de liquide, dans lequel, pour créer la dépression dans le transporteur à palettes (2), une première conduite de liaison (4) mène du transporteur à palettes (2) au conteneur (6) de collecte de liquide et une seconde conduite de liaison (7) du conteneur (6) de collecte de liquide à la pompe à vide (3),
**caractérisé par**
un agencement de vannes de mise à l'air (13) couplé à l'élément capteur (12) pour mettre à l'air la seconde conduite de liaison (7).

7. Procédé selon la revendication 6,
**caractérisé en ce que**
l'agencement de vannes de mise à l'air (13) comprend une vanne proportionnelle (14) et une vanne tout ou rien (15), qui sont montées parallèlement l'une à l'autre.

8. Procédé selon la revendication 6 ou 7,
**caractérisé en ce que**
l'agencement de vannes de mise à l'air (13) est disposé entre le conteneur (6) de collecte de liquide et la pompe à vide (3) sur la seconde conduite de liaison (7).

9. Procédé selon l'une des revendications 6 à 8,
**caractérisé en ce que**
le conteneur (6) de collecte de liquide comprend un couvercle rabattable (18) disposé au moins en partie latéralement, pouvant se fermer par dépression.
